# EUROPEAN PATENT SPECIFICATION

(11) **EP 2 194 656 B1**
(45) Date of publication and mention of the grant of the patent: **25.06.2014**
(21) Application number: 08170550.1
(22) Date of filing: 03.12.2008
(51) Int. Cl.: H04B 3/54

(54) **Electrical power network management system**
System zur Datenverwaltung für elektrische Energieversorgungsnetze
Système de gestion d'un réseau d'énergie électrique

(43) Date of publication of application: 09.06.2010
(73) Proprietor: ABB Research Ltd., 8050 Zürich (CH)
(72) Inventor: Oudalov, Alexandre, CH-5442, Fislisbach (CH); Goerlitz, Otmar, CH-5442, Fislisbach (CH); Koch, Thomas, CH/CH-8050, Zürich (CH); Zhang, Yan, CH-5400, Baden (CH); Frei, Christian, CH-5442, Fislisbach (CH)
(74) Representative: ABB Patent Attorneys

(56) References cited:
- WO-A-95/09473
- US-A1- 2003 218 549

## Description

The present invention generally relates to a method for applying at least one set of parameters to at least one Intelligent Electronic Device of an electrical power network having a plurality of switching devices. Further, it relates to an apparatus adapted to apply at least one set of parameters to at least one Intelligent Electronic Device of an electrical power network having a plurality of switching devices.

A power network is protected from failures (e.g., short-circuits) through the use of Intelligent Electronic Devices (IEDs). The protection functions in an IED have been standardised for example in an IEEE/ANSI standard and are available in IEC 61850 for example as logical nodes.

The aim of every protective setting is to achieve selectivity, i.e., a protection relay closest to a fault location (e.g. upstream in case of radial networks) trips a circuit breaker. All other relays may detect the fault but do not switch off or at least only after a predefined delay. This ensures backup protection if regular protection fails.

Typically, parameters of a protection function are defined at engineering time for a given power network state. However, this state may change over time and thus protection parameters should be adapted. In some cases, engineering does take that into account by defining setting groups for different network states (e.g., summer/winter settings); a setting group typically defines a set of values for protection functions. It is then the responsibility of an operator or a protection engineer at the utility to set the correct active setting group.

With the introduction of microprocessor based relays ideas were developed to use the new processing capabilities and programmability of the relays to adjust the behaviour of the protection system during operation. Until then, typically, a protection system was designed and implemented with an unchangeable behaviour, embodied in various parameters of the relays. The protection engineer designed the system so that it would respond correctly to all contingencies in a power system conceivable at design time. However, since the protection system may respond correctly in a wide variety of different situations, often this behaviour compromises fault selectivity and network availability in favour of reliability.

In contrast, computer based relays allow a change of their characteristics even after they have been installed in a power system.

While there are a number of ideas proposed, the most notable realisation of relay setting adaptation are setting groups. Digital relays have the capacity to store several sets of parameters controlling its behaviour under different system conditions. The settings are defined and uploaded to the relay at engineering time. During operation, the human operator can switch the active setting group by sending a control signal to the relay. The decision when and to which group to switch rests still with the operator.

International patent application WO 95/09473 (Enel SPA) decribes a system for the remote control of the electricity distribution network and telereading of service meters of the customers connected to the same network. Centralized and distributed intelligence manages and transmits information and carrier currents at relatively high frequencies over the electricity network. Also disclosed is a fault current detector which may sense the passage of fault currents. US patent application 2003/218549 (Logvinov et al.) discloses a power line communications system for providing multiple services to isolated power generating plants and isolated communities. For example, broadband telecommunication services may be provided over the electric power network.

Further, one of the major challenges is a protection system for a microgrid which may respond to both main grid and microgrid faults, where the microgrid is connected to the main grid. In a first case the protection system may isolate the microgrid from the main grid as rapidly as necessary to protect the microgrid loads. In a second case, the protection system may isolate the smallest part of the microgrid when it clears the fault. A segmentation of microgrid, i.e. a creation of multiple islands or sub-microgrids may be supported by micro-source and load controllers. In these circumstances problems related to selectivity (false, unnecessary tripping) and sensitivity (undetected faults or delayed tripping) of protection system may arise. In particular, it was seen that a large difference between fault currents in main grid connected and islanded modes may create errors in the protections of microgrids. A microgrid protection system may have a high sensitivity to faults and selectivity to isolate/sectionalize microgrid especially in the case of distributed energy resources (DERs) with power electronics (PE) interfaces (low fault current levels).

In fact a decision on either sectionalize microgrid or shut it down in case of fault will depend on needs of microgrid customers and whether a cost involved (protection and communication) could be justified for benefits gained by a sectionalizing (e.g. reduced end-consumer interruption time).

In fact, operating conditions of a microgrid are constantly changing because of the intermittent micro-sources (wind and solar) and periodic load variation. Typically, also the directions and amplitudes of short circuit currents will vary. Also, a network topology may be regularly changed aimed at loss minimization or achievement of other economic or operational targets. In addition controllable islands of different size and content may be formed as a result of faults in the main grid or inside a microgrid.

In such circumstances a loss of relay coordination may happen and generic over-current (OC) protection with a single setting group may become inadequate, i.e. it will not guarantee a selective operation for all possible faults. Therefore, it is essential to ensure that settings chosen for OC protection relays take into account a grid topology and changes in location, type and amount of generation. Otherwise, unwanted operation or failure to operate when required may occur.

In order to cope with bi-directional power flows and low short-circuit current levels in microgrids dominated by micro-sources with power electronic interfaces a new protection philosophy is required, where setting parameters of relays may be checked/updated periodically to ensure that they are still appropriate.

Object of the invention is to provide an improved protection against faults in electrical power networks, in particular including distributed energy resources.

According to a first aspect, a method for adapting at least one set of parameters to at least one Intelligent Electronic Device of an electrical power network having a plurality of switching devices is provided, comprising: a) reading the current network status of the electrical power network, wherein the network status includes the status of the plurality of switching devices; b) simulating at least one network fault in the electrical power network; c) deducing at least one new set of parameters for the at least one Intelligent Electronic Device using simulated fault currents induced by the at least one simulated network fault under consideration of the current network status and the network topology of the electrical power network; d) setting the at least one set of parameters in at least one of the at least one Intelligent Electronic Device.

In a typical embodiment which may be combined with other embodiments herein, in step c) the at least one new set of parameters is deduced further under consideration of forecast information within a predefined horizon. The predefined horizon for the forecast information may be typically 0,5h, 1h, 6h, 12h or 24h. In a further embodiment the forecast information includes information about the weather, the status of distributed energy resources, e.g. wind turbines, photovoltaic power plants, etc., and/or the future status of loads.

In particular, the invention deals with the protection parameter settings of Intelligent Electronic Devices (IEDs) protecting a power network. The idea of this invention is to augment the capabilities of an IED to detect the need for protection setting adaptation and either inform a human operator of the need (for instance through an alarm) or to perform the parameter settings automatically and autonomously, with the ultimate goal to improve selectivity, sensitivity (relay must sense different faults and does not sense inrush currents) and speed (relay must react in the shortest possible time).

In a typical embodiment the methods according to the invention addresses the following steps: detection of the need for adaptation of the protection settings as a Boolean function of variables describing the power network's state (e.g., position of switches); in a typical embodiment, notification of the operator of the need to update the protection settings of one or more IEDs; an automatic proposal of correct protection parameters - in an typical embodiment to the operator; in a typical embodiment an automatic (and autonomous) update of protection parameters by the IEDs (or a device which can communicate with the IEDs) whenever the need for adaptation is detected.

In a typical embodiment, a method according to the invention may be applied to the setting for over-current protection in radial networks, possibly including distributed generation.

In a further embodiment, which may be combined with other embodiments disclosed herewith, the network topology includes low and medium voltage lines, connections between the plurality of switching devices and the like.

In a further embodiment, the Intelligent Electronic Device may control at least one switching device in the electrical power network, in particular a current breaker.

In a typical embodiment, which may be combined with other embodiments disclosed herewith, the set of parameters includes at least one, in particular a plurality of parameters.

In a typical embodiment, the parameters of the set of parameters may include the protection settings of the at least one Intelligent Electronic Device.

In another embodiment, which may be combined with other embodiments disclosed herewith, the parameters of the set of parameters include tripping voltage, tripping time, tripping conditions or tripping characteristics.

In a typical embodiment, which may be combined with other embodiments disclosed herewith, a status of a switch device may include two states, in particular an open switch state and a closed switch state.

In another embodiment, which may be combined with other embodiments disclosed herewith, the simulated network faults may be located in the electrical power network. In a further embodiment the simulated network fault may be located in a load and/or a distributed energy resource.

Typically, in another embodiment, faults in a distributed energy resource may be cleared by the device's protection (e.g. the generator protection). In a typical embodiment, faults on the load should be cleared by the load's protection (e.g. the main fuse at the houses connection to the electrical network).

In a further embodiment, which may be combined with other embodiments disclosed herewith, the electrical power network may include more than two different Intelligent Electronic Devices, wherein at least two different Intelligent Electronic Devices have different sets of parameters.

In a typical embodiment, which may be combined with other embodiments disclosed herewith, the electric power network is a medium voltage and/or low voltage distribution network.

In another embodiment, which may be combined with other embodiments disclosed herewith, substantially all predictable network faults are simulated.

In a further embodiment, a network fault includes a short circuit, a load error, a lightning, and/or the like.

In another embodiment, which may be combined with other embodiments, the network status may comprise discretized measurements and/or status values, e.g. current, voltage, distributed generation (DG) sources and the like.

According to a further aspect of the invention, a method for adapting at least one set of parameters to at least one Intelligent Electronic Device of an electrical power network having a plurality of switching devices is provided, comprising: a) reading the current network status of the electrical power network, wherein the network status includes the status of the plurality of switching devices; b) selecting the at least one set of parameters for the at least one Intelligent Electronic Device out of a plurality of sets of parameters depending of the current network status; c) setting the at least one set of parameters in the at least one Intelligent Electronic Device.

Though, in a typical embodiment the settings or the set of parameters may be pre-computed before the electrical power network is used.

In a typical embodiment which may be combined with other embodiments herein, in step b) the at least one new set of parameters are selected under consideration of forecast information within a predefined horizon. The predefined horizon for the forecast information may be typically 0,5h, 1h, 6h, 12h or 24h. In a further embodiment the forecast information includes information about the weather, the status of distributed energy resources, e.g. wind turbines, photovoltaic power plants, etc., and/or the future status of loads.

According to a typical embodiment, the plurality of sets of parameters is created by permuting through a plurality of network statuses, wherein for each network status i) at least one network fault is simulated in the electrical power network; and ii) at least one new set of parameters for the at least one Intelligent Electronic Device is deduced under considerations of the at least one simulated network fault, the network status, and the network topology.

In a further embodiment, which may be combined with other embodiments disclosed herein, each network status is encoded into logic expressions, in particular in Boolean expressions, in particular such that the network status is represented by a vector comprising binary values.

In another embodiment, steps i) and ii) are created by permuting through substantially all network statuses.

In a typical embodiment, a method may further comprise creating a table and/or a database comprising the network statuses, in particular encoded in logic expressions, and the set of parameters corresponding to each network status in the table and/or the database.

In a further embodiment, substantial only network statuses that have influence on the behaviour of the protection system of the at least one Intelligent Electronic Devices may be stored in the table and/or the database.

In a typical embodiment, the table and/or the database are stored in the Intelligent Electronic Device and/or a storing device in a substation, in a distribution region, in a network control center.

According to a further embodiment, which may be combined with other embodiments disclosed herein, after step a), the method comprises: a1) encoding the actual network status into logic expressions, in particular into Boolean expressions, in particular such that the network status is represented by a vector comprising binary values.

Though, Boolean values simplify the deducing of the set of parameters or the selecting of the set of parameters may be. Further, in a typical embodiment, Boolean values may simplify the determination if relay or switch settings have to be adapted.

In a typical embodiment, steps a), b), c) and/or d) are performed after an event.

Though, it may be determined, in particular automatically, the necessity to adapt relay settings or the settings of an Intelligent Electronic Device.

In a typical embodiment, an event may be a change of the network status, a change of weather, a change of time.

Further, in a typical embodiment, the deducing of the at least one new set of parameters may include forecast information about future loads, future available energy resources, and the like. Though, in a further embodiment the forecast may have a forecast time, wherein, in particular, the setting of the at least one set of parameters in the at least one Intelligent Electronic Device is applied approximately at the forecast time.

In a further embodiment, an event may be the connection or disconnection of a distributed energy resource, a network topology change, e.g. into an islanded mode or into a connected mode.

Further an event may include the change in the forecast of distributed generation (DG) levels.

In a typical embodiment, which may be combined with further embodiments disclosed herein, a system state or the network status may be sent only on change, in particular if the network status is discretized, in particular via a communication infrastructure. The network status may be sent via GOOSE messages of IEC 61850.

In a further embodiment, step a) is performed periodically.

In a further embodiment which may be combined with other embodiments disclosed herein, steps b), c) and/or d) may be only performed if the actual network state differs from the previous network state.

In a typical embodiment, the set of parameters of the at least one Intelligent Electronic Device is only set, if the at least one parameters differs from the actual at least one parameter.

In a typical embodiment, the relay settings and/or the set of parameters is only sent to the affected relay or Intelligent Electronic Device. Thus, the quantity of communication messages may be reduced.

In another embodiment, the network status includes the position of all switches.

According to a typical embodiment, the network status includes the status of a distributed energy resource connected to the electrical power network and/or the status of a load connected to the electrical power network.

In a typical embodiment distributed energy resources may be a Diesel generator, a Photovoltaic energy source and/or wind energy source.

In a further embodiment which may be combined with other embodiments, the set of parameters are applied to the Intelligent Electronic Device is set automatically.

A further aspect of the invention may be directed to an apparatus adapted to adapt at least one set of parameters to at least one Intelligent Electronic Device of an electrical power network having a plurality of switching devices, wherein the apparatus is adapted to receive the current network status of the electrical power network, wherein the network status includes the status of the plurality of switching devices; wherein the apparatus comprises a calculation unit adapted for simulating at least one network fault in the electrical power network and for deducing at least one new set of parameters for the at least one Intelligent Electronic Device using a simulated fault current induced by the at least one simulated network fault under considerations of the current network status and the network topology of the electrical power network; wherein the apparatus further provides the set of parameters to the at least one Intelligent Electronic Device for updating the parameters of the Intelligent Electronic Device.

In a typical embodiment, a self-adapting protection IED is provided.

According to another aspect, an apparatus adapted to adapt at least one set of parameters to at least one Intelligent Electronic Device of an electrical power network having a plurality of switching devices is provided, wherein the apparatus is adapted to receive the current network status of the electrical power network, wherein the network status includes the status of the plurality of switching devices; wherein the apparatus comprises a calculation unit adapted for selecting the at least one set of parameters for the at least one Intelligent Electronic Device out of a plurality of sets of parameters depending of the current network status; wherein the apparatus further provides the set of parameters to the at least one Intelligent Electronic

### Device for updating the electronic device.

According to a typical embodiment, which may be combined with other embodiments, the network status is encoded into logic expressions, in particular into Boolean expressions, in particular such that the network status may be represented by a vector comprising binary values.

In a further embodiment, the apparatus is adapted creating the plurality of sets of parameters by permuting through a plurality of network status, wherein for each network status i) at least one network fault is simulated; and ii) at least one new set of parameters for the at least one Intelligent Electronic Device is deduced using a simulated fault current induced by the at least one simulated network fault under considerations of the network status and the network topology.

In a typical embodiment, the electric power network include radial networks, meshed networks, over current and directional over-current relays, in networks with or without distributed generators (DG)

In a further embodiment, which may be combined with other embodiments, the network status may be collected at a central computer, for example in a substation, in a region, in a network control center, and/or in an Intelligent Electronic Device.

In a typical embodiment, the apparatus is an Intelligent Electronic Device or a relay.

In another typical embodiment, the network status may be collected in each relay or Intelligent Electronic Device.

Though, in a typical embodiment, the affected relay or Intelligent Electronic Device activates the settings or the set of parameters without further coordination with other relays. Thus, even an activation of new settings in only a few relays cannot worsen the behaviour of the protection system.

In a typical embodiment, an electrical network communication infrastructure may be provided between Intelligent Electronic Devices.

In a further embodiment, if one relay or Intelligent Electronic Device is not able to determine new settings it may obtain new settings or a set of parameters from any other relay via communication infrastructure. In a typical embodiment, which may be combined with other embodiments a first relay or a first Intelligent Electronic Device may send a request after a specific time delay and/or as result of its performance check by neighbouring devices to a second relay or a second Intelligent Electronic Device.

In a typical embodiment, each relay or Intelligent Electronic Device calculates or deduces the new set of parameters. Then, the Intelligent Electronic Device has the settings or set of parameters ready. In a further embodiment, the Intelligent Electronic Device or relay calculates or deduces the new set of parameters on request, in particular of a substation, a network control center and/or another Intelligent Electronic Device or relay.

In a typical embodiment, in an electric power network with at least two relays or Intelligent Electronic Devices, one of these Intelligent Electronic Devices may calculate or deduce the set of parameters or settings for other Intelligent Electronic Devices or relays. Though, the calculating or deducing relay or Intelligent Electronic Device may act as primus inter pares and may be responsible for the calculations or as back-up scheme in case a relay fails to execute the calculations.

Further advantages, features, aspects and details are evident from the dependent claims, the description and the drawings.

Embodiments are also directed to apparatuses for carrying out the disclosed methods and including apparatus parts for performing described method steps. Furthermore, embodiments are also directed to methods by which the described apparatus operates or by which the described apparatus is manufactured. It may include method steps for carrying out functions of the apparatus or manufacturing parts of the apparatus. The method steps may be performed by way of hardware components, firmware, software, a computer programmed by appropriate software, by any combination thereof or in any other manner.

Thus, the capabilities of an IED is augmented to detect the need for protection setting adaptation and either inform a human operator of the need (for instance through an alarm) or to perform the parameter settings automatically and/or autonomously. Thus the selectivity, sensitivity (relay may sense different faults and does not sense inrush currents) and/or speed (relay may react in the shortest possible time) of an IED are improved.

In a typical embodiment, the concept of the invention based on an adaptation of protection relay settings with regard to a microgrid state (e.g. topology, generation and load).

In a typical embodiment, the following definitions may be used: Adaptive Protection: An on-line activity that modifies the preferred protective response to a change in system conditions or requirements. It is usually automatic, but can include timely human intervention. Adaptive Relay: A relay that can have its settings, characteristics or logic functions changed on-line in a timely manner by means of externally generated signals or control action.

Typically, the goal of adaptive protection is not to re-establish correct or reliable behaviour of the protection system after a change in the power system, since the initial settings will normally protect the system under all circumstances. Instead the adaptation aims at improving selectivity, avoiding nuisance trips, etc., and thus increases the availability of the network.

Typically adaptive protection may be categorised by their technical approach:
- Include additional measurements, e.g. load or fault characteristics, in the relays calculations and tripping logic.
- Communicate system state information, e.g. switch positions, to the relay and use the information in the tripping logic.
- Analyse the system state (off-line) and check relay settings against the current system state; modify settings and upload to the relay if necessary.

So that the manner in which the above recited features of the present invention can be understood in detail, a more particular description of the invention, briefly summarized above, may be had by reference to embodiments. The accompanying drawings relate to embodiments of the invention and are described in the following:

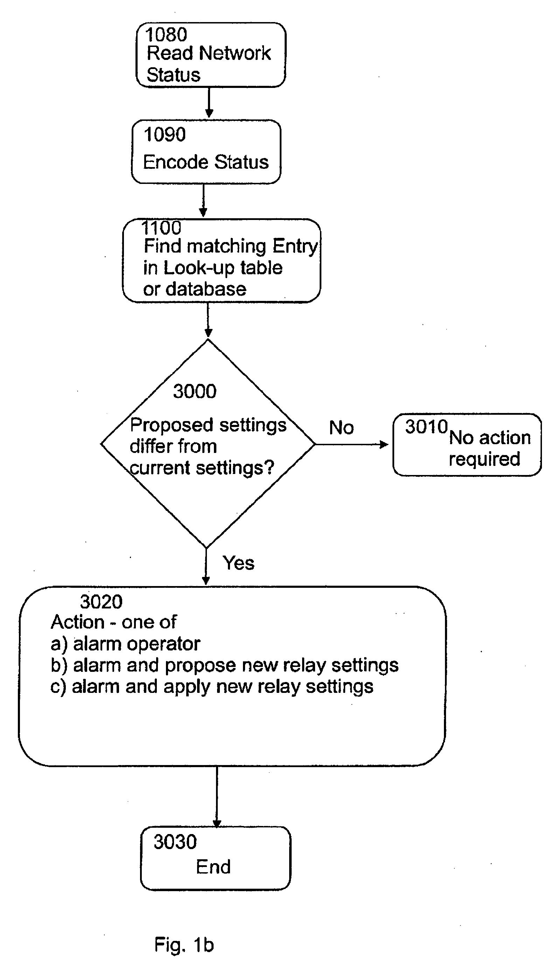

Fig. 1b shows a flow chart of a method for an offline calculation of parameters
Fig. 1b shows a flow chart of a method using the parameters of an offline calculation;
Fig. 2 shows a flow chart of a method of an on-line calculation of parameters;
Fig. 3 depicts schematically a network;
Fig. 4 depicts schematically the network of Fig. 3 with a fault;
Fig. 5 depicts schematically the network of Fig. 4 after a fault;
Fig. 6 shows schematically a further embodiment of a network;
Fig. 7 shows schematically the network of Fig. 6 with faults;
Fig. 8 shows schematically the network of Fig. 6 with a microgrid central controller;
Fig. 9 depicts schematically a local protection function insed a circuit breaker;
Fig. 10 depicts schematically a structure of an event table;
Fig. 11 shows schematically an embodiment of an microgrid protection and control architecture; and
Fig. 12 shows schematically phases of an on-line adaptive protection algorithm.

It is contemplated that elements of one embodiment may be advantageously utilized in other embodiments without further recitation.

Power systems currently undergo considerable change in operating requirements - mainly as a result of deregulation and due to an increasing amount of distributed energy resources (DER). In many cases DER include different technologies that allow generation in small scale (micro-sources) and some of them take advantage of renewable energy resources (RES) such as solar, wind or hydro energy. Having micro-sources close to a load has the advantage of reducing transmission losses as well as preventing network congestions. Moreover, the chance of having a power supply interruption of end-customers connected to a low voltage (LV) distribution grid is diminished since adjacent micro-sources, controllable loads and energy storage systems may operate in an islanded mode in case of severe system disturbances (in fact a power delivery can be fully independent of the state of the main grid). This is in a typical embodiment known as a microgrid. Microgrids offer various advantages to end-consumers, utilities and society, such as:
- improved energy efficiency,
- minimized overall energy consumption,
- reduced greenhouse gases and pollutant emissions,
- improved service quality and reliability,
- cost efficient electricity infrastructure replacement.

For the general description of the following embodiment, it may be assumed that there is a substation automation system in place, or at least a communication infrastructure between intelligent electronic devices (IEDs), e.g. such as one based on IEC 61850. Also, it may be assumed that a network in which the main protection system is comprised of over-current (OC) relays. In case there are distributed energy resources (DER) connected to the network, the main protection system consists of directional over-current relays.

In a typical embodiment, which may be combined with other embodiments, an IED is a microprocessor based controller of power system equipment, e.g. for circuit breakers, relays, transformers and/or capacitor banks. An IED may receive data from at least one sensor and power equipment. Further, an IED may issue commands, such as tripping circuit breakers if they sense voltage, current, or frequency anomalies, or raise or lower voltage levels in order to maintain the desired level. In a typical embodiment, an IED may contain around 5 to 12 protection functions, 5 to 8 control function for controlling separate devices. Further an IED may include communication functions.

In an embodiment, the status of the power system with respect to topology can be represented by analysing the network's base topology and the current position of substantially all switches. This information may be mapped in a typical embodiment which may be combined with other embodiments to clauses of Boolean logic. The logical formulas, in turn, may correspond to relay settings appropriate for the particular network state. Hence, settings for the (directional) OC relays may be obtained by using the switch state information as input for evaluating the Boolean formulas. In other embodiments other logics may be used to map the network status.

In another embodiment, the network status may include only the status of substantially all switches, the status of loads and/or the status of distributed energy resources. Then, the topology of the network may be stored separately and/or deducted from the network status and a base topology, representing the schematically all positions of network elements and network nodes and the like.

Typically, the term relay is used synonymously to an intelligent electronic device (IED). In a typical embodiment, an intelligent electronic device may include a relay.

Typically, two typical embodiments of the method for deriving the relay settings for a particular network state may be possible:
In a first embodiment of the method all possible settings can be pre-computed. The Boolean formula is then used as index to select the appropriate settings. Typically, this embodiment for deriving the relay settings may be applied when the network has relatively small number of possible states. That means that all states of the may be calculated before the network is installed or connected.
In a second embodiment of the method, relay settings may be computed on-line, that means e.g. in case that a position of a switch has been changed. An algorithm determining correct relay settings will take as input the same Boolean network representation. In this case, rules for calculating relay settings, which in the first case were used during engineering time, are embodied in the algorithm and can be executed any time during network operation.

In the two embodiments depicted above, the information about network state may be augmented by using, in addition to switch state, measurements or other information available. Particularly, information about the generation level of distributed energy resources (DER) may be useful to obtain a more precise network state representation. This information may be discretized, so it may be used to augment the original clauses of Boolean logic.

In a typical embodiment, it is also possible to incorporate forecasts (e.g., for DER generation levels, such as forecasts depending on weather conditions or similar, and/or loads). Again the information may be used to augment the Boolean formulas or other logic formulas, so the above stated two mechanisms may be applied.

In a further embodiment, which may be combined with other embodiments disclosed herein, the system state information or network status information, i.e. switch positions, and/or discretized augmenting information as described above, may be sent periodically or on change via a communication infrastructure of the substation automation system.

According to an embodiment, the need to adapt protection parameters of an IED controlling e.g. a circuit breaker may be detected.

In addition to other means that may detect the necessity to update the relays' parameters, the above described evaluation of Boolean or other logic formulas may yield this information. Using the described methods appropriate relay settings for the current network state may be obtained. These settings may be compared to currently active relay settings. In an embodiment, in case of a difference, the relay settings may be changed.

When incorporating forecast information, as described above for an embodiment, a triggering of parameter adaptation may also be time-dependent. The forecast may define, in a typical embodiment, the time when the predicted conditions are assumed to become reality, or a defined time before they become reality, e.g. 0,5h, 1h, 12h or 24h before they become reality. Hence, adaptation of relay parameters may be triggered at a certain point in time. In a typical embodiment, to accommodate for possible deviations from predictions, a check of actual network state, and possibly again corrective action may be advised.

The functionality defining the need for protection setting adaptation may be set up in the same manner as for topology-based inter-locking rules. In an embodiment, IEC 61850 is used, such that amounts to configure each IED to listen to specific GOOSE messages sent by other IEDs informing them typically on the position of relevant switches for them to decide upon the need for protection setting reconfiguration, in the same manner as control interlocking (CILO) logical nodes are using the input of other (relevant) switches' position to determine if a switch can be opened or closed with respect to inter-locking rules. In a typical embodiment, the relevant switches and other information such as power flow direction, if necessary, may be determined at engineering time, in particular in a similar way as it is done for inter-locking.

Note that a change in network state and/or topology may require to adapt the parameters of several protection functions and thus may impact, in particular independently, several IEDs or relays.

In a typical embodiment, once the need for re-configuration has been identified, the operator may be notified through appropriate means, e.g. by an alert on a monitor and/or through a dedicated alarm message of the underlying communication technology. It is then a human's (e.g., the operator's or the protection engineer's) responsibility to take action, either by selecting and adequate setting group or by changing the protection parameters in the IED(s).

In another embodiment which may be combined with other embodiments disclosed herein, protection parameters may be adapted automatically if no human intervention is desired as described in the next section.

In a typical embodiment, the detection of the need for re-configuration of the protection parameters may also be taken over by another computing device (or master) that is able to communicate with the IEDs, such as a station computer in the substation or a gateway. The same method then applies to that computing device, and it may replace the detection method for all IEDs it can communicate with.

The detection of the need for re-configuration of the protection parameters is performed either whenever one input to the Boolean formulas or other suitable logical formulas change (event-based), and/or, periodically. In a typical embodiment, in order to avoid unnecessary computation and/or (operator) notification, a pre-set delay may be used so that multiple consecutive changes are treated "as one".

In the following, the automatic update of protection settings of a relay for a circuit breaker or a switch is described.

In an embodiment, once the need for re-configuration has been identified, the relevant protection parameters may be updated automatically by the IED(s). Four alternative cases may apply which may be, in some embodiments, combined with each other:
1. The protection parameters for each possible network state is pre-computed during engineering time and saved in the IEDs. Then, Boolean logic on relevant switches and possibly other discrete (or discretized) criteria may be used to identify the corresponding network state and thus the protection parameters to apply, which can then be set independently by the IED(s). In one embodiment, the concept of setting groups may be used to store the different sets of parameters corresponding to the relevant network states, provided the IED(s) offer enough of them. This case is especially applicable when the number of possible cases (network states with different settings) are not too numerous (the impact on processing power is low).
2. In another embodiment, the protection parameters may be recomputed independently by each affected IED in a similar fashion than it is done during engineering for case 1. The algorithm for determining relay settings may be location independent, i.e. each relay may use the same algorithm with the same input information, in particular a representation of the network status. Protection parameters are then set independently in each IED (provided they are different than the ones in use). In this embodiment, which may be combined with other embodiments, the parameter settings may be computed automatically without human intervention and that the IED(s) have the processing power to run such an algorithm.
3. In a further embodiment, another computing device (or master) that can communicate with all the IEDs (e.g., a station computer in the substation, a gateway, or even one of the relays) takes over the detection of the need for re-configuration of the protection functions. The same computing device then determines the parameters to use in the current network state, either using pre-computed tables (in a similar fashion than described in case 1), or by using a dedicated algorithm (in a similar fashion than described in case 2). The modified protection parameters are then uploaded to all IEDs by the master.
4. A variation of of the embodiment case 3 is when the network state change requires to reconfigure the protection parameters running in IEDs that are not directly connected (communication-wise) to a same computing device (or master). In such a case, every master may perform the protection parameter update independently in its domain (where the domain is the set of all IEDs it can communicate with directly).

Typically, neither of the above four cases for updating the relay settings requires transactional behaviour in the update process, in particular in order to ensure that all protection functions that need to be adapted are indeed done so, furthermore at the same time. In particular, in a typical embodiment, it is not enforced that all or none of the affected relays update their parameters. Hence, in this embodiment, no "Commit" or "Revert Back" logic is required. The "Commit" or "Revert Back" logic typically refers to transactional behaviour. If a number of settings are applied or if new settings are applied to a number of devices, transactional behaviour would ensure "all or none". If all settings applied correctly, the change is commited and it is valid from this moment. If any single application of a new value failed, then the intelligent electronic device may revert back to the previous state and all the new settings are discarded. This is typically also known as "rollback". In particular, in an embodiment, the "commit" or "Revert Back" logic, i.e. "all or nothing", in the transactional behaviour may be not required. Typically, the protection system does not deteriorate of some of a group of relays could not successfully apply new settings. This means, in particular, that there is no need to enforce a co-ordination among the relay with respect to the update of their parameters. In a typical embodiment, the algorithm that determines the correct relay settings (at design time or on-line) ensures that the behaviour of the protection system is not compromised if one relay fails to update its parameters. In case where several over-current protection functions (running possibly on different IEDs) need to have their parameters updated, even if one does not have its settings adapted the selectivity and/or sensitivity will be improved, compared to the situation where no parameter at all is adapted.

In an embodiment, the need for automatic updates can be triggered either event-based (e.g., whenever a relevant switch's position changes) or periodically. Typically, a pre-set delay can be introduced to avoid unnecessary "intermediate" parameter adaptations, so that multiple consecutive changes are treated "as one".

In a further embodiment, instead of updating the protection parameters automatically, a human-supervised procedure may be applied: one of the described methods can be used to determine proper protection parameter values; those are then suggested to a human operator who will then have the choice to accept them (and thus they may be set automatically) or refuse them.

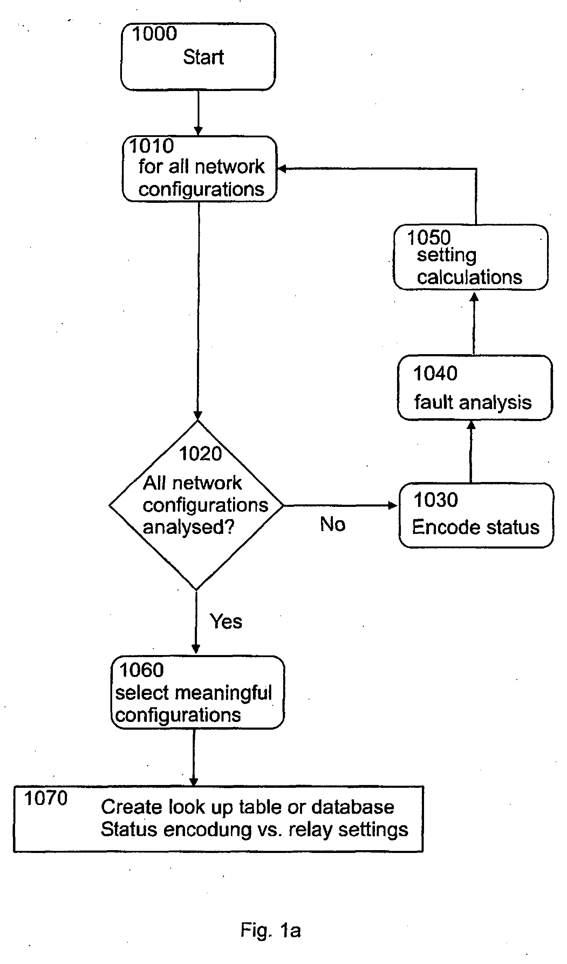

Fig. 1a shows a first portion of a flowchart of an embodiment of a method. In the embodiment shown in Figs. 1a and 1b, the steps 1000 to 1070 shown in Fig. 1a may be performed at engineering time, e.g. before new switch or circuit breaker has been installed in a network. In the offline-analysis shown in Fig. 1a, for all network configurations the status is encoded, a fault analysis is performed and subsequently the settings for an IED or the like is calculated. The status of a network may include the configuration of a switch, e.g. if a switch or a circuit breaker is open or closed, the configuration of an energy source, the configuration of a load, and/or the like. For example, the power produced by a distributed energy source like a photovoltaic plant may vary during the day, weather and/or the year. Each of these status configurations may be in an embodiment encoded in Boolean clauses (see step 1030). In a further embodiment, another suitable logic may be used.

In a further step 1040, a fault analysis takes place. The fault analysis may include all predictable faults in the network, e.g. short circuits, faults of a load and/or the like.

In a further step 1050, the best settings for all IEDs are calculated. In a typical embodiment the settings may be used that provides the best availability of electrical power to the loads. After the settings for all network configurations are calculated, in a typical embodiment, only the meaningful configurations are selected. This step may be omitted in some embodiments. In particular configurations that have no influence on the behaviour of the protection system may be discarded. In a further embodiment, only the settings for the meaningful configurations are calculated, i.e. the loop shown in Fig. 1a with steps 1010, 1020, 1030, 1040 and 1050 would be only performed for the meaningful configurations. That may reduce the amount of calculations.

In step 1070, all configurations are stored in a lookup table or a database. Any other suitable storing scheme may be used for storing the configurations. For example, the configurations may be stored centrally in a master server that is in connection with all IEDs. In another embodiment, each IEDs stores for each network configuration only the parameters or settings for its use.

In the following it will be explained, in an exemplary embodiment, how the settings or parameters are adapted during operation of the network. This is explained with respect to Fig. 1b.

During network operation, the starting of the method steps shown in Fig. 1b may be event based, e.g. after a switch position has changed, or periodically, and/or manually. Then, in step 1080, the network status is read. For example, all positions of the switches may be read. In the subsequent step 1090 the network status is encoded. The encoding may include not only switch position information, but also information about the weather, the power provided by distributed energy resources, and/or the like.

After encoding the information, the encoded information is used for finding a matching entry in the stored look-up table or in a database (step 1100). The settings or parameters for the IEDs are loaded.

In a typical embodiment, in step 3000, these settings or parameters are compared the current settings in the IEDs. If, for example, the proposed settings do not differ from the current settings, no action is required. In case the proposed new settings or parameters differ from the current settings, in step 3020 either an operator is alarmed, an operator is alarmed and new settings or parameters are proposed for the IEDs, or an operator is alarmed and the settings or parameters are set automatically in the IEDs. In a further embodiment, the new settings may be also applied without alarm.

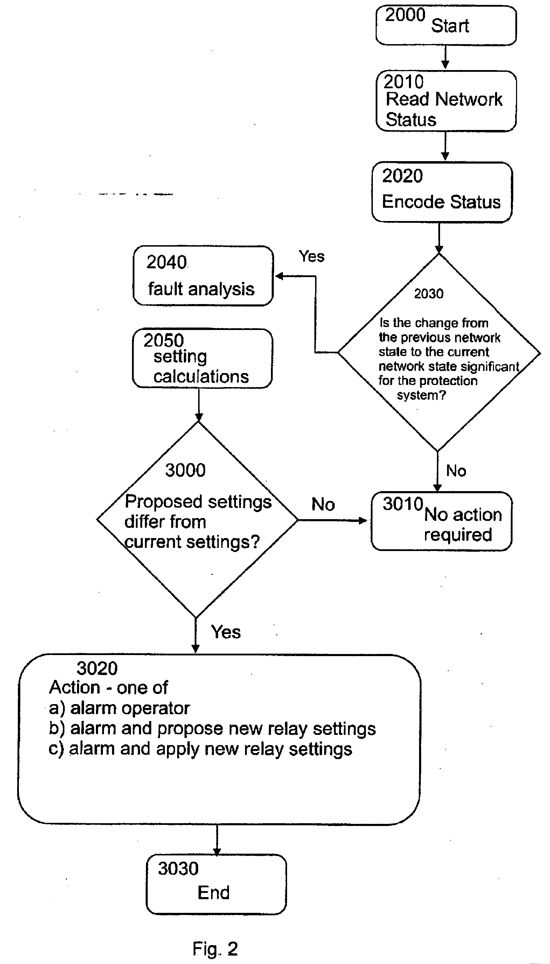

Fig. 2 shows a flowchart of a second embodiment of a method. In the embodiment of Fig. 2, the possible settings or parameters for each IED are not precalculated at engineering time as already mentioned with respect to the embodiment of the method shown in Figs. 1a and 1b, but the possible settings or parameters are calculated during the operation of a network after a new network status has been detected or the begin of the method may have been triggered otherwise.

During network operation, the starting of the method steps shown in Fig. 2 may be event based, e.g. after a switch position has changed, or periodically, and/or manually. Then, in step 2010, the network status is read. For example, all positions of the switches may be read. In the subsequent step 2020 the network status is encoded. The network status may be encoded in a typical embodiment into a Boolean logic. The encoding may include not only switch position information, but also information about the weather, the power delivered by distributed energy resources, and/or the like. In another embodiment, the step 2020 is omitted.

In step 2030, the current network status is compared with the previous network status. In particular it is determined if the change in the network status is significant for the protection system. If the network configuration or status change will not influence the behaviour of the protection system, the costly analysis of the faults may be avoided. In another embodiment, the compare step is omitted an the fault analysis is always performed.

Steps 2040 and 2050 correspond to the steps 1040 and 1050 of the embodiment shown in Fig. 1a. In particular, in these steps the possible faults in the network are analysed and the settings or parameters of the IEDs or relays are computed.

Steps 3000 to 3030 correspond to the steps 3000 to 3030 of the embodiment shown in Fig. 1b such that for the sake of simplicity it is referred to the description of Fig. 1b.

### First practical Example

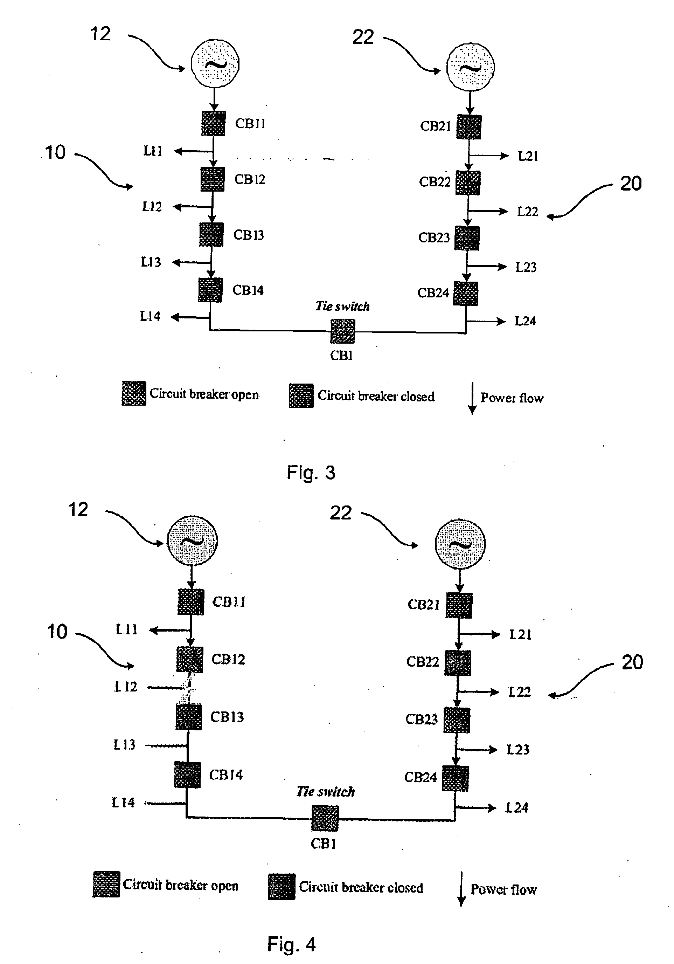

In Fig. 3 an embodiment shows an example from the feeder automation. Fig. 3 shows two feeders 10, 20 with a normally open switch (tie switch) CB1 in between. An over-current protection is installed at a level of each circuit breaker CB1, CB11, CB12, CB13, CB14, CB21, CB22, CB23 and CB24.

The first feeder 10 and the second feeder 20 are powered by different sources 12, 22 and separated by a normally open switch (or tie switch) CB1. Further, Fig. 3 shows multiple loads L11, L12, L13, L14, L21, L22, L23 and L24. Protection of the network is ensured by over-current protection functions running in IEDs at the level of each circuit breaker CB11, CB12, CB13, CB14, CB21, CB22, CB23 and CB24. In the present example, switches are circuit breakers in order to simplify the discussion.

As it is shown in Fig. 4 a fault may occur on the line towards the load L12. If properly engineered (i.e., if the protection parameters of all over-current protection functions are properly set), the over-current protection function at the level of circuit breaker CB12 may initiate a trip of circuit breaker CB12. As a consequence, loads L13 and L14 are not powered anymore, as shown in Fig. 4.

A manual or automatic feeder restoration algorithm may restore the power to loads L13 and L14 as follows, in case that the power source 22 for the second feeder 20 has enough capacity):
1. Fault isolation: open circuit breaker CB 13.
2. Power restoration to the loads L13 and L14 by closing the tie switch or circuit breaker CB1.

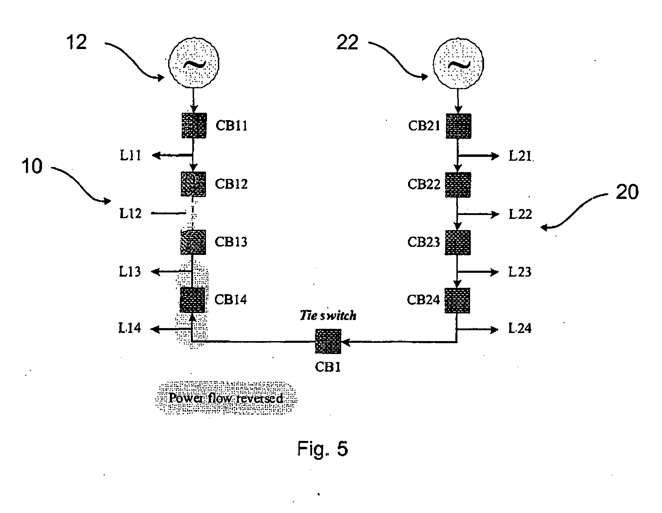

Thus, after the situation depicted in Fig. 4, the feeder restoration algorithm will therefore isolate the fault in the load L12 by copening circuit breaker CB13 and then closing the tie switch CB1 as shown in Fig. 5. Power is thus restored to loads L13 and L14 via the second feeder 20. However, as a consequence, the power flow through circuit breaker CB14 is reversed compared to the situation before the fault. Therefore, according to an embiment, the time delay setting for over-current protection in circuit breaker CB 14 may be updated - it may "react" faster than the ones in CB1 (and thus circuit breaker CB24). In other words, if both the over-current functions at circuit breaker CB14 and at circuit breaker CB1 detect a fault, the one at circuit breaker CB14 should react faster. Therefore, in order to ensure the selectivity criterion, the over-current protection setting at circuit breaker CB14 level should then be set to a lower time delay (and/or different tripping current) than the one in circuit breaker or tie switch CB1 and circuit breaker CB24.

According to an embodiment, an IED may detect that the over-current protection function in circuit breaker CB 14 may be adapted without human intervention (or a centralized entity). By listening to GOOSE (Generic Object Oriented Substation Events) messages sent by circuit breaker CB13 and tie switch CB1, it can determine that power flow through circuit breaker CB14 is reversed and thus that the current settings of the over-current protection function for circuit breaker CB14 are not properly defined (not selective) anymore.

In another embodiment, the IED containing the over-current protection function for circuit breaker CB14 has power flow detection mechanisms available, such that this information is enough to trigger the adaptation need of the over-current protection's parameters.

At this point, in an embodiment, either an alarm may be raised to inform the operator (e.g., through the use of a dedicated GGIO logical node if IEC 61850 is being used), who is then in charge to change protection parameters (for instance, in a typical embodiment by changing the active setting group), or the settings may be, in an embodiment, updated automatically.

In an embodiment, upon detection that parameters for the over-current protection need to be adapted, the parameters can be updated automatically.

Typically, in an embodiment, the settings for all different network topologies are pre-computed and stored internally in the IED. For example, Boolean logic on the position of relevant switches may be used to select and apply the correct protection setting case. In the example of Fig. 5, this may be applied for circuit breaker CB14. The use of setting groups is possible if there are enough of them. Otherwise, in another embodiment, an internal table may be used. Further, the parameters of the over-current protection functions "upstream",i.e., in direction of the current source 22, namely the over-current protection functions for circuit breakers CB1, CB24, CB23, CB22, and CB21, may also need to be updated if the parameters for circuit breaker CB14 cannot be set to a lower delay value than the others. That means the parameters of the circuit breaker CB14 may be set such that circuit breaker "reacts" faster than circuit breaker CB1, which reacts faster than circuit breaker CB24, which reacts faster than circuit breaker CB23, which reacts faster than circuit breaker CB22, which reacts faster than circuit breaker CB21. In a typical embodiment, the IED(s) holding these protection functions may also listen to the changes in topology and react independently.

In a further embodiment, the IED of the circuit breaker CB14 has an internal model of the power network or the network topology, and the positions of the relevant switches (in a typical embodiment, all circuit breakers depicted in Figs. 3 to 5) and recomputes the adequate settings automatically. That means that the parameters or protection settings may not be looked up in a table, but are analysed online. Note that the over-current protection functions of the circuit breakers CB1, CB24, CB23, CB22, and CB21 situated "upstream" may be updated in a similar or independent fashion.

In another embodiment, which may be combined with other embodiments described herein, a centralized computing device, or master (e.g., a station computer, a gateway with computing capabilities), with communication to all switches CB1, CB11, CB12, CB13, CB14, CB21, CB22, CB23 and CB24 in both feeders 10, 20 does the parameter setting automatically by remote commands to all the involved IEDs. In an embodiment, the centralized computer either has pre-computed solutions for each topology case, i.e. each topology case is stored in a data base or a table. The parameters for each circuit breaker CB1, CB11, CB12, CB13, CB14, CB21, CB22, CB23 and CB24 are then sent to the respective IEDs. In another embodiment, the centralized computing device or master recomputes the settings for all protection functions so that they satisfy the selectivity criterion. Such a (semi-centralized) solution is typically preferred when IEDs have limited memory and/or computing resources. In a further embodiment, wherein no single computing device is controlling (e.g. with direct communication to) all involved IEDs, parameter setting can be distributed over several masters (for example with possible coordination among them to ensure time-coordinated setting).

### Second practical example

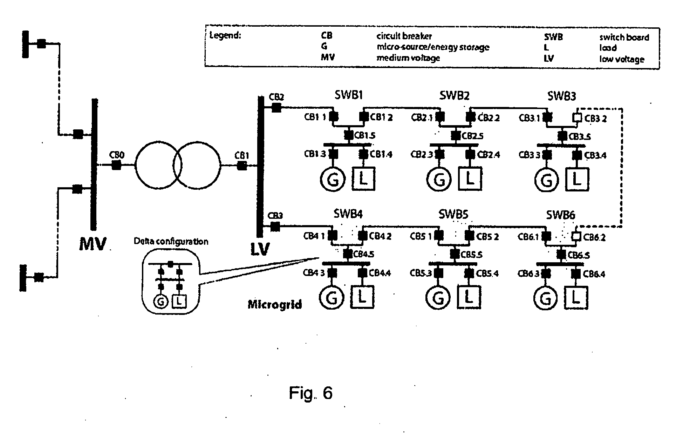

In the following, embodiments with distributed energy resources are described. Compared to the network shown in Figs. 3 to 5, the distribution network shown Fig. 6 comprises at each feeder several distributed energy resources (DER) units that are marked with G. The DER may be for example a micro-source or an energy storage source. The microgrid is connected to the main medium voltage (MV) grid when the circuit breaker (CB) CB1 is closed. The circuit breakers CB2 and CB3 are normally closed and circuit breakers CB 3.2 and 6.2 are normally opened. Therefore, the network shown in Fig. 6 includes a low voltage (LV) part with a first feeder with circuit breaker CB2 and switch boards SWB1, SWB2 and SWB2 and a second feeder with circuit breaker CB3 and switch boards SWB3, SWB5 and SWB6.

A protection of distribution grid where feeders are radial with loads tapped-off along feeder sections is usually designed assuming a unidirectional power flow and is based on OC relays with time-current discriminating capabilities. OC protection detects the fault from a high value of the fault current flowing downwards. In modem digital relays a tripping short-circuit current can be set in a wide range (e.g. 0.6-15*CB rated current). If a measured current is above the tripping setting, the relay operates to trip the CB on the line with a delay defined by a coordination study and compatible with a locking strategy used (no locking, fixed hierarchical locking, directional hierarchical locking).

In a typical embodiment, distribution grids may include one or more DERs such as solar or photovaltaic (PV) panels, wind and micro-gas turbines, fuel cells, etc. Typically, most of the micro-sources and energy storage devices are not suitable for supplying power directly to the grid and may be interfaced to the grid with power electronics (PE).

A use of PE interfaces may lead to a number of challenges in microgrid's protection, especially in the islanded mode.

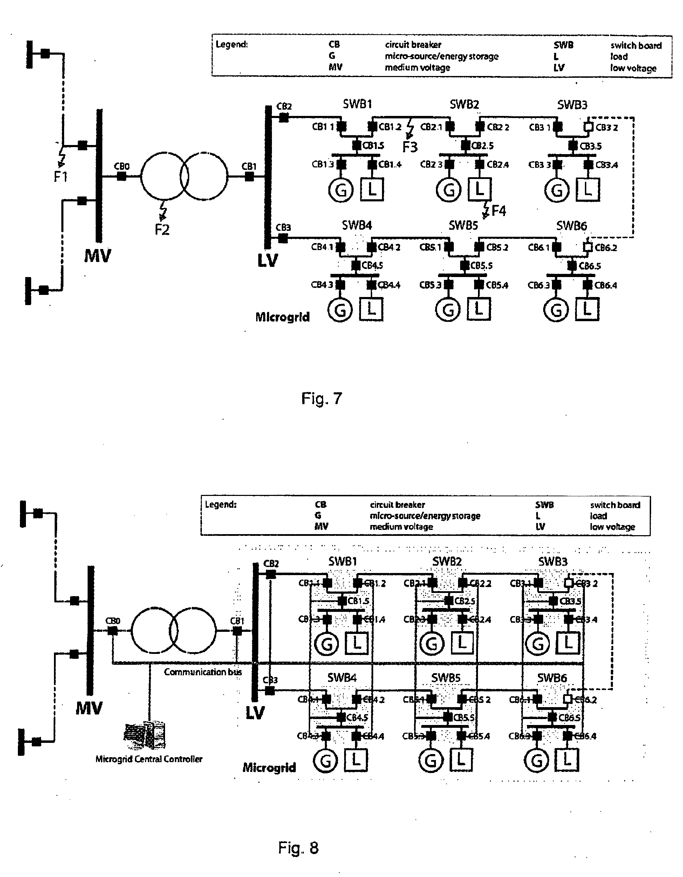

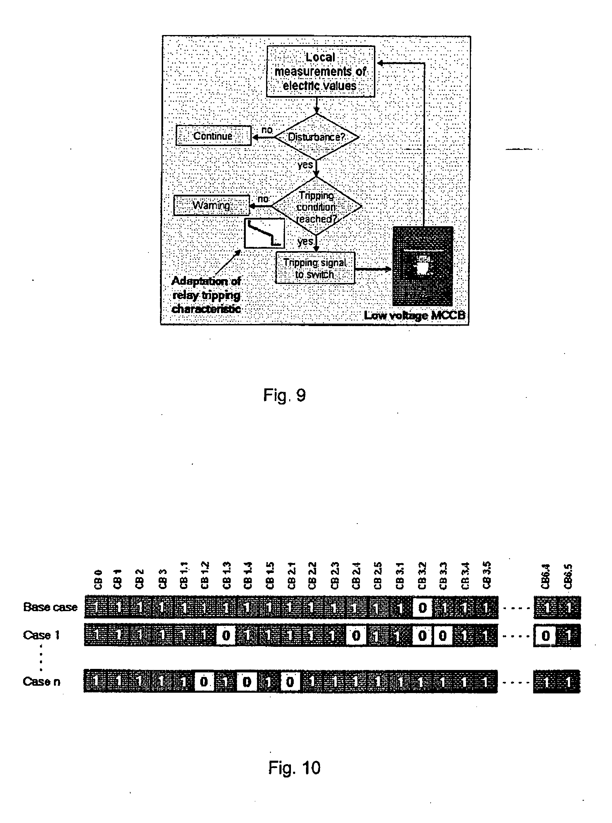

Fig. 7 represents the same microgrid as shown in Fig. 6 with two feeders connected to the LV bus and to the MV bus via a distribution transformer. Each feeder has three switchboards SWB1, SWB2, SWB3, SWB4, SWB5, SWB6. Each switchboard may have a star or delta configuration and connects distributed energy resources (DER), in particular marked with G in the drawings, and load L to the feeder. In Fig. 9 two external (F1, F2) and two internal (F3, F4) microgrid faults are shown. All low voltage circuit breakers CB1, CB2, CB3, CB1.1, CB1.2, CB1.3, CB1.4, CB1.5, CB2.1, CB2.2, CB2.3, CB2.4, CB2.5, CB3.1, CB3.2, CB3.3, CB3.4, CB2.5, CB4.1, CB4.2, CB4.3, CB4.4, CB4.5, CB5.1, CB5.2, CB5.3, CB5.4, CB5.5, CB6.1, CB6.2, CB6.3, CB6.4 CB6.5 may have different ratings but in this embodiment are equipped with an over current (OC) protection and used for segmenting the microgrid, in particular the distribution LV feeder.

In general, protection issues in microgrid can be divided in two groups regarding to a microgrid operating state. Table 1 shows Major Classes of Microgrid Protection problems. Table 1 also shows an importance of "3S" (sensitivity, selectivity and speed) requirements for different cases, which provides a basis for design criteria of a microgrid protection system.

**TABLE 1**

| Operating mode | Fault location | | | |
|---|---|---|---|---|
| | External faults (main grid) | | Internal faults (microgrid) | |
| | MV feeder, bus-bar (F1) | Distribution transformer (F2) | LV feeder (F3) | LV consumer (F4) |
| Grid connected (CB1 is closed) | Fault is normally managed by MV system. Microgrid isolation by CB1 in case of no MV protection tripping. Possible fault sensitivity problems for CB1^{*}. | Fault is normally managed by MV system (CBO). CB1 is opened by "follow-me" function of CB0. In case if communication fails then possible fault sensitivity problem for CB1^{*}. | Disconnect a smallest portion of microgrid (CB1.2 and CB2.1). CB 1.2 is opened by fault current from the grid (high level). Low level of a reversed fault current from feeder's end may cause sensitivity problems for CB2.1*. In this case a "follow-me" function of CB1.2 can to open CB2.1. In case if communication fails then possible fault sensitivity problems for CB2.1*. | Faulty load is isolated by CB2.4 or fuse. In case of no tripping the SWB is isolated by CB2.5 and local DER is cut-off. No sensitivity or selectivity problems. |
| Islanded (CB1 is open) | --- | --- | Disconnect the smallest portion of microgrid (CB1.2 and CB2.1). Low level of fault currents from both directions may cause sensitivity problems for CB1.2 and CB2.1*. | Faulty load is isolated by CB2.4 or fuse. In case of no tripping the SWB is isolated by CB2.5 and local DER is cut-off. Sensitivity or selectivity problems no likely. |

| | | | | |
|---|---|---|---|---|
| *) low fault current contribution from the Microgrid in case of DER with PE interfaces. | | | | |

### Grid connected - external fault (F1, F2)

Typically, in case of first fault F1 a main grid (MV) protection may clear the fault. If sensitive loads are presented in microgrid, the microgrid may be isolated by circuit breaker CB1 as fast as 70 ms (depending on a voltage sag in the microgrid). Also the microgrid may be isolated from the main grid by circuit breaker CB1 in case of no medium voltage (MV) protection tripping.

A detection of fault F1 with a generic over current (OC) relay can be problematic in case most of micro-sources in the microgrid are connected by means of PE interfaces which have built-in fault current limitation (i.e. there is no significant rise in current passing through circuit breaker CB1). Typically they are capable of supplying 1.1-1.2*I_{DERrated} to a fault, unless the converters are specifically designed to provide high fault currents. These numbers are much lower than a short-circuit current supplied by the main grid. A directional over current relay in circuit breaker CB1 may be only a feasible solution if current is used for the fault detection. In order to increase relay sensitivity a setting for a reverse current is defined as a sum of fault current contributions from all connected distributed energy resources (DER) (1). This value will vary in case of a large number of different types of DER. Thus, the setting has to be continuously monitored and adapted when microgrid generation undergoes considerable change (number and type of connected DER).

Alternatively, voltage sag (magnitude and duration) or/and system frequency (instantaneous value and rate of change) may be used as another indicators for a tripping of circuit breaker CB1. Some distribution network operators (DNO) may require microgrid to stay connected and supply reactive power to the fault up to several seconds.

In case of fault F2 a distribution transformer OC protection clears the fault by opening circuit breaker CB0. Circuit breaker CB1 is opened simultaneously by "follow-me" function (hardware lock) of circuit breaker CB0. In case of hardware lock failure a possible fault sensitivity problem can arise as in the case of fault F1. Typical solutions are similar to fault F1 case (directional adaptive OC protection, under-voltage and under-frequency protection).

### Grid connected - fault in the microgrid (F3)

In the case of fault F3, a short-circuit current is supplied to the fault from two sides, namely from the medium voltage (MV) distribution grid, shown on the left side of Fig. 7, via switch board SWB1 and DER at switch boards SWB2 and SWB3. The short-circuit current magnitude through circuit breaker CB1.2 will depend on the status of circuit breaker CB1.3. In case of fault F3 a microgrid protection may disconnect a smallest possible portion of the LV feeder by circuit breaker CB1.2 and circuit breaker CB2.1. Circuit breaker CB1.2 is opened due to a high level of short-circuit current supplied by the main MV grid. If circuit breaker CB 1.2 fails to trip, the fault F3 may be cleared by circuit breaker CB 1.1 which is a backup protection for circuit breaker CB1.2. However, a sensitivity of OC protection relay in circuit breaker CB1.1 can be potentially disturbed in case a large synchronous DER (e.g. diesel generator) is installed and switched-on in switch board SWB1 (i.e. between circuit breaker CB1.1 and the fault F3). In this case the fault current passing through the circuit breaker CB1.1 in case with DER will be smaller than in case without DER. In other words, if the DER at SWB1 is capable to supply high fault current (e.g. synchronous generator) and is connected (circuit breaker CB1.3 is closed) then the fault current will be higher than in case when DER is disconnected (circuit breaker CB1.3 is open). This effect may be known as protection blinding (the larger the synchronous DER the greater is the effect) and may result in a delayed circuit breaker CB1.1 tripping because of the fault current transition from a definite-time part to an inverse-time part of relay tripping characteristic. A delayed fault tripping will lead to an unnecessary disconnection of local synchronous DER (usually low power diesel generators have very low inertia and can lose synchronism in case of slow clearing faults). This issue can be solved by a proper coordination of microgrid and DER protection systems. Another option is adapting protection settings with regard to current operating conditions (DER status).

But in case CB1.2 failed to open, then circuit breaker CB2 may open. However, if DER at switch board SWB1 is connected (circuit breaker CB1.3 is closed) and has a relatively high disconnection time delay the fault current through circuit breaker CB2 will be lower (e.g. 70-90% of the case without DER) Because of the DER's contribution to the short-circuit current, the voltage drop over the feeder section between the DER and the fault increases, which result in a lower fault current from the grid.This may result in a delayed circuit breaker CB2 tripping (because the fault current is moved from the instantaneous to the inverse-time part of the relay tripping characteristic) and may lead to an unnecessary DER disconnection in switch boards SWB4, SWB5 and SWB6.

If, as likely, circuit breaker CB 1.2 operates faster than circuit breaker CB2.1 it will island a part of the microgrid, including switch boards SWB2 and SWB3, which will be connected to the fault F3. If it is possible to balance generation and load in the islanded segment of the microgrid, e.g. micro-sources or DERs are capable to supply loads directly or after load shedding, it is expedient to isolate that group of micro-sources and loads from the fault F3 by opening circuit breaker CB2.1 and possibly closing circuit breaker CB3.2 to 6.2.

However, a reversed and low level short circuit current in case of DER with PE interfaces will cause a sensitivity problem for circuit breaker CB2.1 similar to one described above in case of the fault F1. Here, sensitivity of the protection system without directional OC protection is critical because short-circuit current changes direction and can not reach the level of short circuit current provided by the MV grid. Possible solutions include directional adaptive OC protection and a "follow-me" function of circuit breaker CB1.2 which opens circuit breaker CB2.1 (in case of communication failure possible sensitivity problems for circuit breaker CB2.1). Settings of directional protection may take into account the number and type of available DER in the islanded segment. In that case directional OC relay settings in the direction to the MV grid are considerably lower than in the direction from the MV grid.

### Grid connected - fault in the end-consumer site (F4)

In case of fault F4 a high short-circuit current is supplied to the fault from the main grid together with a contribution from DER and will lead to a tripping of circuit breaker CB2.4. Frequently, there is a fuse instead of a circuit breaker which is rated in such a way that a shortest possible fault isolation time is guaranteed. In case of no tripping the switch board SWB2 is isolated by circuit breaker CB2.5 and local DER is cut-off. No sensitivity or selectivity problems are foreseen in this scenario.

### Islanded mode - fault in the microgrid (F3)

The microgrid operates in the islanded mode when it is intentionally disconnected from the main MV grid by circuit breaker CB1 (full microgrid) or a circuit breaker along the low voltage (LV) feeder (a segment of the microgrid). This operating mode is characterized by an absence of a high level of short-circuit current supplied by the main grid. Generic OC relays would be replaced by directional OC relays because fault currents flow from both directions to the fault F3.

If circuit breaker CB1.2 and circuit breaker CB2.1 use setting groups chosen for the grid connected mode they will have a selectivity problem to detect the fault F4 and trip within acceptable time frame in case of DER with PE interfaces (the fault current could shift from a definite-time part to an inverse-time part of the relay tripping characteristic). In particular, one needs to care about a fault if there is no fault current for the safety of people. Further, permanent faults may spread out and destroy more equipment.

Typically above issues may be addressed by:
- Installing a source of high short-circuit current (e.g. a flywheel or a super-capacitor) to trip CBs/blow fuses with settings/ratings for the grid connected mode. However, a short-circuit handling capability of PE interfaces can be increased only by increasing the respective power rating which leads to higher investment cost.
- Installing an adaptive microgrid protection using on-line data on microgrid topology and status of available micro-sources/loads.

### Islanded mode - fault in the end-consumer site (F4)

In case of fault F4 a low short-circuit current is supplied to the fault from the local DER. There is no grid contribution. However, circuit breaker CB2.4 settings selected for the main grid connected mode are just slightly higher than rated load current. It assures that the end-customer site will be disconnected even if only DERs with power electronics (PE) interfaces are available in the microgrid. In case of no tripping the switch board switch board SWB2 may be isolated by circuit breaker CB2.5 using directional OC relay. Similar to the grid connected mode there are no sensitivity or selectivity problems are foreseen in the islanded mode for the fault in the end-consumer site.

In the following, an embodiment is described wherein an impact of micro-sources (DERs) and microgrid configuration on the relay performance is anticipated and accordingly the relay settings are changed to ensure that the whole microgrid is protected at all times. Adaptive protection may be defined in an embodiment as "an online activity that modifies the preferred protective response to a change in system conditions or requirements in a timely manner by means of externally generated signals or control action".

For example, in case the fault F3 is detected and successfully isolated by circuit breaker CB2.1 the switch boards SWB2 and SWB3 will operate as an electrical island known as microgrid. In this configuration there is no high short-circuit current from the MV grid. The OC protection may be upgraded/changed to directional OC relays because in the case of fault short-circuit currents will flow from both directions to the fault. In case circuit breakers use setting groups from the grid connected mode they will not be able to detect the fault and trip instantaneously if most DERs have power electronics (PE) interfaces with a limited fault current contribution. In extreme cases, the fault current contribution from DERs can only reach 1.1-1.2 times the rated current. Here, again only adaptive protection can guarantee a detection and selective operation of relays. When switch boards SWB2 and SWB3 are isolated and fault is happening between switch boards SWB2 and SWB3 and if both nodes can maintain a balance between generation and consumption then protection settings of current breaker CB2.2 may be modified. If this will not be done, then current breakers CB2.2 and CB3.1 will open after a considerable delay and DERs in switch boards SWB2 and SWB3 will be disconnected and as a result the load in switch boards SWB2 and SWB3 will be interrupted.

In a typical embodiment, in a first step it may be detected that the protection parameters need to be adapted. For example, triggering events may be used for that purpose. Triggering events for updating protection settings of different IEDs/electronic releases in a distribution feeder with DER comprises: Connection/disconnection of DER, Topology change (as in the previous example) including islanded mode, and/or the like.

In a typical embodiment, numerical directional OC relays may be used. Fuses or electromechanical and standard solid state relays are typically especially for selectivity holding inapplicable, because they don't provide flexibility for setting of tripping characteristics as well as no current direction sensitivity feature.

In a further embodiment that may be combined with other embodiments, numerical directional OC relays may dispose of possibility for different tripping characteristics (several settings groups) which may be parameterized.

In another embodiment that may be combined with other embodiments disclosed herein, new or existing communication infrastructure (e.g. twisted pair, power line) and standard communication protocols (for example Modbus or IEC61850) are used such that individual relays can communicate and exchange information with a central computer or between different individual relays fast and reliably to guarantee a required application performance.

In an embodiment, communication between circuit breakers CB0, CB1, CB2, CB3, CB1.1, CB1.2, CB1.3, CB1.4, CB1.5, CB2.1, CB2.2, CB2.3, CB2.4, CB2.5, CB3.1, CB3.2, CB3.3, CB3.4, CB3.5, CB4.1, CB4.2, CB4.3, CB4.4, CB4.5, CB5.1, CB5.2, CB5.3, CB5.4, CB5.5, CB6.1, CB6.2, CB6.3, CB6.4 CB6.5, and central unit provides an opportunity to detect a need for a modification of protection settings of directional OC relays without human intervention.

In case DER in switch board SWB1 is switched on, i.e. circuit breaker CB1.3 is closed and communicates its status to a central protection coordination unit/other circuit breakers which can determine that fault current through circuit breaker CB2 decreases and fault current through circuit breaker CB 1.2 increases and that the current settings of OC protection relays are not properly defined anymore.

In a further step, the protection settings may be updated, in particular automatically. Upon detection that parameters for the OC protection need to be adapted, the parameters can be updated automatically. This can be achieved in different ways:

In an embodiment, the settings for all relevant combinations of network topologies and position of DERs are pre-computed and stored internally in the IEDs of the circuit breakers (each circuit breaker in the low voltage grid).

In another embodiment, the IED has an internal model of the power network and the positions of the relevant switches (feeder and DERs). In this case, all circuit breakers depicted in Fig. 6 and recomputes the adequate settings automatically.

In a further embodiment, a centralized computing device, or master (e.g., a station computer, a gateway with computing capabilities), with communication to all switches or circuit breakers does the parameter setting automatically by remote commands to all the involved IEDs. The centralized computer may have pre-computed solutions for each topology case (feeder and/or DERs) or may recompute the settings for all protection functions so that they satisfy the selectivity criterion. Such a (semi-centralized) solution is typically preferred when IEDs have limited memory and/or computing resources. In an embodiment, which may be combined with other embodiments, wherein no single computing device is controlling (with direct communication to) all involved IEDs, the parameter setting can be distributed over several masters (with possible coordination among them to ensure time-coordinated setting). In another embodiment, which may be combined with other embodiments, in the islanded mode a calculation can be done on a central computer if it can communicate with the islanded part of the distribution grid, or directly at the islanded switch boards if they have enough computing capacity.

In Fig. 8 an embodiment of a centralized adaptive protection system is shown. There is a microgrid central controller (MCC) and communication system in addition to elements shown in Figs. 6 and 7.

Electronics make each circuit breaker CB0, CB1, CB2, CB3, CB1.1, CB1.2, CB1.3, CB1.4, CB1.5, CB2.1, CB2.2, CB2.3, CB2.4, CB2.5, CB3.1, CB3.2, CB3.3, CB3.4, CB2.5, CB4.1, CB4.2, CB4.3, CB4.4, CB4.5, CB5.1, CB5.2, CB5.3, CB5.4, CB5.5, CB6.1, CB6.2, CB6.3, CB6.4 CB6.5 with an integrated directional OC relay capable of exchanging information with microgrid central controller MCC. For example, in Fig. 8 circuit breakers CB0, CB1, CB2, CB3, CB1.1, CB1.2, CB1.3, CB1.4, CB1.5, CB2.1, CB2.2, CB2.3, CB2.4, CB2.5, CB3.1, CB3.2, CB3.3, CB3.4, CB2.5, CB4.1, CB4.2, CB4.3, CB4.4, CB4.5, CB5.1, CB5.2, CB5.3, CB5.4, CB5.5, CB6.1, CB6.2, CB6.3, CB6.4 CB6.5 are connected to a serial communication bus RS485 and use standard industrial communication protocol Modbus. By polling individual relays the MCC can read data (electrical values, status) from circuit breakers and if necessary modify relay settings (e.g., tripping characteristics). Other communication protocols and buses may be used in other embodiments.

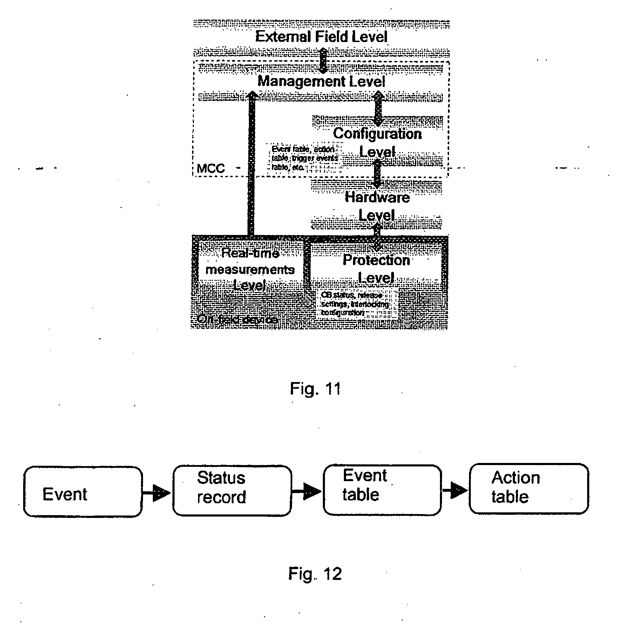

Each individual relay takes a tripping decision locally (independently of MCC) and performs in accordance to Fig. 9. Fig. 9 shows a local protection function inside a circuit breaker. In case an abnormal situation is detected a tripping condition is checked. For example, a measured current in a specific direction is compared with the actual relay setting. If the tripping condition is reached a circuit breaker is open. Fig. 11 shows an example with respect to a low voltage circuit breaker. The same may also apply, in some embodiments, to medium voltage or high voltage circuit breakers.

The adaptive protection system according to the embodiment shown in Fig. 8 is to maintain settings of each relay with regard to a current state of the microgrid. It is effectuated by a special module in MCC which is responsible for a periodic check and update of relay settings of the circuit breakers CB0, CB1, CB2, CB3, CB1.1, CB1.2, CB1.3, CB1.4, CB1.5, CB2.1, CB2.2, CB2.3, CB2.4, CB2.5, CB3.1, CB3.2, CB3.3, CB3.4, CB2.5, CB4.1, CB4.2, CB4.3, CB4.4, CB4.5, CB5.1, CB5.2, CB5.3, CB5.4, CB5.5, CB6.1, CB6.2, CB6.3, CB6.4 CB6.5. In a typical embodiment, the modul may include to components, namely a pre-calculated information during off-line fault analysis of a given microgrid, and an on-line operating block.

### Offline analysis

A set of meaningful microgrid configurations as well as feeding-in states of DERs (on/off) is created for off-line fault analysis and is called an event table. Typically, each record in the event table has a number of elements equal to a number of monitored CBs in the microgrid and is binary encoded, i.e. element = 1 if a corresponding CB is closed and 0 if it is open. Fig. 12 shows an embodiment of a structure of an event table. Also other embodiments may be used. For example a database may be used. Next, fault currents passing through all monitored circuit breakers are estimated by simulating short-circuits (3-phase, phase-to-ground, etc.) in different locations of the protected microgrid at a time. During repetitive short-circuit calculations a topology or a status of a single DER is modified between iterations. As different fault locations for different microgrid states are processed the results (the magnitude and direction of fault current seen by each relay) are saved in a specific data structure.

Based on these results suitable settings for each directional OC relay, i.e. for each IED of a circuit breaker in the microgrid, and for each particular system state are calculated in such a way that guarantees a selective operation of microgrid protection. These settings are grouped into an action table or an action database which has in a typical embodiment the same dimension as the event table.

The event and action tables may be, in an embodiment, part of the configuration level of the microgrid protection and control system or architecture shown in Fig. 11.

*External Field Level* represents energy market prices, weather forecast, heuristic strategy directives and other utility information.

### Management Level includes historic measurements and distribution management system (DMS).

*Configuration Level* consists of a computer or programmable logic circuit (PLC) situated centrally (e.g. at a substation) or locally (e.g. at a switchboard) which is able to detect a system state change and send a required action to hardware level.

*Hardware Level* transmits a required action from the configuration level to on-field devices by means of a communication network. In the case of a large microgrid, this function can be divided between several local controllers which communicate only selected information to the central unit.

*Protection Level* may include CB status, release settings, interlocking configuration, etc. Together with *Real-time Measurements Level* they are sitting inside on-field devices.

### Online operation

During the on-line operation the MCC monitors the microgrid state by polling individual directional OC relays. This process runs periodically or is triggered by an event (tripping of CB, protection alarm, etc.) and may use the communication system shown in Fig. 8. The microgrid state information received by the MCC is used to construct a status record which may have a similar dimension as a single record in the event table. The status record is used to identify a corresponding entry in the event table. Finally, the algorithm retrieves the pre-calculated relay settings from the corresponding record in the action table and uploads the settings to on-field devices via the communication system. Fig. 12 illustrates phases of an online adaptive protection algorithm with available look-up tables, namely the event and action tables.

The written description uses examples to disclose the invention, including the best mode, and also to enable any person skilled in the art to make and use the invention. While the invention has been described in terms of various specific embodiments, those skilled in the art will recognize that the invention can be practiced with modifications within the spirit and scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims.

## Claims

1. A method for adapting at least one set of parameters of at least one Intelligent Electronic Device (IED) of an electrical power network having a plurality of switching devices (CB), comprising:
a) reading a present network status of the electrical power network, wherein the present network status includes a present status of the plurality of switching devices (CB);
b) deducing at least one new set of parameter values for the at least one Intelligent Electronic Device based on a fault current
c) applying the at least one new set of parameter values to the at least one set of parameters of the at least one Intelligente Electronic Device;
the method **characterised in that** the step of deducing is based on a fault current passing through the plurality of monitored switching devices (CB) and estimating said fault current induced by at least one simulated network fault (F) under consideration of the current network status and a network topology of the electrical power network.

2. The method according to claim 1, wherein
in step b) the at least one new set of parameter values is deduced further under consideration of forecast information within a predefined horizon.

3. The method according to claim 1, wherein
in step b) the at least one new set of parameter values is selected, depending on the current network status, out of a plurality of sets of parameter values.;

4. The method according to claim 3, wherein
the plurality of sets of parameter values is created by permuting through a plurality of network statuses, wherein for each network status
i) at least one network fault (F) is simulated in the electrical power network: and
ii) at least one new set of parameter values for the at least one Intelligent Electronic Device is deduced using a simulated fault current induced by the at least one simulated network fault under considerations of the network status and the network topology.

5. The method according to claim 4, wherein
each network status is encoded into logic expressions, in particular in Boolean expressions, in particular such that the network status is represented by a vector comprising binary values.

6. The method according to claim 4, wherein steps i) and ii) are created by permuting through substantially all network statuses.

7. The method according to one of the claims 4 to 6, further comprising
creating a table and/or a database comprising the network statuses, in particular encoded in logic expressions, and the set of parameter values corresponding to each network status in the table and/or the database.

8. The method according to one of the claims 1 to 7, wherein
after step a), the method comprises:
a1) encoding the actual network status into logic expressions, in particular into Boolean expressions, in particular such that the network status is represented by a vector comprising binary values.

9. The method according to one of the claims 1 to 8, wherein
steps a), b), c) and/or d) are performed after an event and/or step a) is performed periodically.

10. The method according to one of the claims 1 to 9, wherein
the network status includes the position of all switching devices.

11. The method according to one of the claims 1 to 10, wherein the network status includes the status of a distributed energy resource connected to the electrical power network and/or the status of a load connected to the electrical power network.

12. An apparatus for adapting at least one set of parameters of at least one Intelligent Electronic Device of an electrical power network having a plurality of switching devices,
wherein
- the apparatus is adapted to read a present network status of the electrical power network, wherein the present network status includes a present status of the plurality of switching devices;
- the apparatus comprises a calculation unit adapted for simulating at least one network fault in the electrical power network and for estimating fault currents passing through a plurality of monitored circuit breakers, the fault currents being induced by the at least one simulated network fault under consideration of the current network status and a network topology of the electrical power network;
- the apparatus is adapted to deduce a new set of parameter values for the at least one Intelligent Electronic Device based on the estimated fault currents;
- the apparatus is adapted to provide the new set of parameter values to the at least one Intelligent Electronic Device for updating the at least one set of parameters of the Intelligent Electronic Device.

13. The apparatus according to claim 12,
wherein the calculation unit is adapted for selecting the at least one new set of parameter values for the at least one Intelligent Electronic Device out of a plurality of sets of parameter values depending on the present network status.

14. The apparatus according to claim 12 or 13, wherein the network status is encoded into logic expressions, in particular into Boolean expressions, in particular such that the network status may be represented by a vector comprising binary values.

15. The apparatus according to claim 13, wherein the apparatus is adapted for creating the plurality of sets of parameter values by permuting through a plurality of network statuses, wherein for each network status
i) at least one network fault is simulated; and
ii) at least one new set of parameter values for the at least one Intelligent Electronic Device is deduced using an estimated fault current induced by the at least one simulated network fault under consideration of the network status and the network topology.

## Patentansprüche

1. Verfahren zum Anpassen von mindestens einem Satz von Parametern von mindestens einer Intelligenten Elektronischen Vorrichtung (IED) eines elektrischen Leitungsnetzes, das mehrere Schaltvorrichtungen (CB) hat, umfassend:
a) Lesen eines aktuellen Netzstatus des elektrischen Leitungsnetzes, wobei der aktuelle Netzstatus einen aktuellen Status der mehreren Schaltvorrichtungen (CB) umfasst;
b) Ableiten von mindestens einem neuen Satz von Parameterwerten für die mindestens eine Intelligente Elektronische Vorrichtung auf der Grundlage eines Fehlerstroms;
c) Anwenden des mindestens einen neuen Satzes von Parameterwerten auf den mindestens einen Satz von Parametern der mindestens einen Intelligenten Elektronischen Vorrichtung;
wobei das Verfahren **dadurch gekennzeichnet ist, dass** der Schritt des Ableitens auf einem Fehlerstrom, der durch die mehreren überwachten Schaltvorrichtungen (CB) fließt, und dem Abschätzen des Fehlerstroms beruht, der durch mindestens einen simulierten Netzfehler (F) unter Berücksichtigung des aktuellen Netzstatus und einer Netztopologie des elektrischen Leitungsnetzes hervorgerufen wird.

2. Verfahren nach Anspruch 1, wobei
in Schritt b) der mindestens eine neue Satz von Parameterwerten ferner unter Berücksichtigung von Vorhersageinformationen innerhalb eines vorgegebenen Horizonts abgeleitet wird.

3. Verfahren nach Anspruch 1, wobei
in Schritt b) der mindestens eine neue Satz von Parameterwerten je nach dem aktuellen Netzstatus aus mehreren Sätzen von Parameterwerten ausgewählt wird.

4. Verfahren nach Anspruch 3, wobei
die mehreren Sätze von Parameterwerten durch Permutieren von mehreren Netzstatus erzeugt werden, wobei für jeden Netzstatus
i) mindestens ein Netzfehler (F) im elektrischen Leitungsnetz simuliert wird; und
ii) mindestens ein neuer Satz von Parameterwerten für die mindestens eine Intelligente Elektronische Vorrichtung unter Verwendung eines simulierten Fehlerstroms abgeleitet wird, der durch den mindestens einen simulierten Netzfehler unter Berücksichtigung des Netzstatus und der Netztopologie hervorgerufen wird.

5. Verfahren nach Anspruch 4, wobei
jeder Netzstatus in logischen Ausdrücken codiert ist, insbesondere in Booleschen Ausdrücken, insbesondere derart, dass der Netzstatus durch einen Vektor dargestellt wird, der Binärwerte umfasst.

6. Verfahren nach Anspruch 4, wobei die Schritte i) und ii) durch Permutieren von im Wesentlichen allen Netzstatus erzeugt werden.

7. Verfahren nach einem der Ansprüche 4 bis 6, das ferner Folgendes umfasst:
Erzeugen einer Tabelle und/oder einer Datenbank, die die Netzstatus umfasst, insbesondere codiert in logischen Ausdrücken, und den Satz von Parameterwerten, die jedem Netzstatus in der Tabelle und/oder der Datenbank entsprechen.

8. Verfahren nach einem der Ansprüche 1 bis 7, wobei nach Schritt a) das Verfahren Folgendes umfasst:
a1) Codieren des aktuellen Netzstatus in logischen Ausdrücken, insbesondere in Booleschen Ausdrücken, insbesondere derart, dass der Netzstatus durch einen Vektor dargestellt wird, der Binärwerte umfasst.

9. Verfahren nach einem der Ansprüche 1 bis 8, wobei
die Schritte a), b), c) und/oder d) nach einem Ereignis ausgeführt werden und/oder Schritt a) periodisch ausgeführt wird.

10. Verfahren nach einem der Ansprüche 1 bis 9, wobei
der Netzstatus die Position aller Schaltvorrichtungen umfasst.

11. Verfahren nach einem der Ansprüche 1 bis 10, wobei
der Netzstatus den Status einer verteilten Energieressource, die mit dem elektrischen Leitungsnetz verbunden ist, und/oder den Status einer Last umfasst, die mit dem elektrischen Leitungsnetz verbunden ist.

12. Vorrichtung zum Anpassen von mindestens einem Satz von Parametern von mindestens einer Intelligenten Elektronischen Vorrichtung (IED) eines elektrischen Leitungsnetzes, das mehrere Schaltvorrichtungen (CB) hat,
wobei
- die Vorrichtung dafür ausgelegt ist, einen aktuellen Netzstatus des elektrischen Leitungsnetzes auszulesen, wobei der aktuelle Netzstatus einen aktuellen Status der mehreren Schaltvorrichtungen umfasst;
- die Vorrichtung eine Berechnungseinheit umfasst, die zum Simulieren von mindestens einem Netzfehler im elektrischen Leitungsnetz und zum Abschätzen von Fehlerströmen ausgelegt ist, die durch mehrere überwachte Leistungsschalter fließen, wobei die Fehlerströme durch den mindestens einen simulierten Netzfehler unter Berücksichtigung des aktuellen Netzstatus und einer Netztopologie des elektrischen Leitungsnetzes hervorgerufen werden;
- die Vorrichtung zum Ableiten eines neuen Satzes von Parameterwerten für die mindestens eine Intelligente Elektronische Vorrichtung auf der Basis der geschätzten Fehlerströme ausgelegt ist;
- die Vorrichtung zum Bereitstellen des neuen Satzes von Parameterwerten für die mindestens eine Intelligente Elektronische Vorrichtung zum Aktualisieren des mindestens einen Satzes von Parametern der Intelligenten Elektronischen Vorrichtung ausgelegt ist.

13. Vorrichtung nach Anspruch 12,
wobei die Berechnungseinheit zum Auswählen des mindestens einen neuen Satzes von Parameterwerten für die mindestens eine Intelligente Elektronische Vorrichtung aus mehreren Sätzen von Parameterwerten in Abhängigkeit vom aktuellen Netzstatus ausgelegt ist.

14. Vorrichtung nach Anspruch 12 oder 13, wobei der Netzstatus in logischen Ausdrücken codiert ist, insbesondere in Booleschen Ausdrücken, insbesondere derart, dass der Netzstatus durch einen Vektor dargestellt werden kann, der Binärwerte umfasst.

15. Vorrichtung nach Anspruch 13, wobei die Vorrichtung zum Erzeugen der mehreren Sätze von Parameterwerten durch Permutieren mehrerer Netzstatus ausgelegt ist, wobei für jeden Netzstatus
i) mindestens ein Netzfehler simuliert wird; und
ii) mindestens ein neuer Satz von Parameterwerten für die mindestens eine Intelligente Elektronische Vorrichtung unter Verwendung eines simulierten Fehlerstroms abgeleitet wird, der durch den mindestens einen simulierten Netzfehler unter Berücksichtigung des Netzstatus und der Netztopologie hervorgerufen wird.

## Revendications

1. Procédé d'adaptation d'au moins un ensemble de paramètres d'au moins un Dispositif Electronique Intelligent (IED, Intelligent Electronic Device) d'un réseau d'alimentation électrique comportant une pluralité de dispositifs de commutation (CB) comprenant :
a) la lecture d'un état de réseau présent du réseau d'alimentation électrique, dans lequel l'état de réseau présent comprend un état présent de la pluralité de dispositifs de commutation (CB) ;
b) la déduction d'au moins un nouvel ensemble de valeurs de paramètres pour ledit au moins un Dispositif Electronique Intelligent sur la base d'un courant de défaut ;
c) l'application dudit au moins un nouvel ensemble de valeurs de paramètres audit au moins un ensemble de paramètres dudit au moins un Dispositif Electronique Intelligent ;
le procédé étant **caractérisé en ce que** l'étape de déduction est fondée sur un courant de défaut passant à travers une pluralité de dispositifs de commutation (CB) surveillés et l'estimation dudit courant de défaut induit par au moins un défaut de réseau simulé (F) en tenant compte de l'état de réseau courant et d'une topologie de réseau du réseau d'alimentation électrique.

2. Procédé selon la revendication 1, dans lequel lors de l'étape b), l'au moins un nouvel ensemble de valeurs de paramètres est en outre déduit en tenant compte d'informations de prévision en deçà d'un horizon prédéfini.

3. Procédé selon la revendication 1, dans lequel lors de l'étape b), l'au moins un nouvel ensemble de valeurs de paramètres est sélectionné en fonction de l'état de réseau courant parmi une pluralité d'ensembles de valeurs de paramètres.

4. Procédé selon la revendication 3, dans lequel la pluralité d'ensembles de valeurs de paramètres est créée en effectuant une permutation parmi une pluralité d'états de réseau, dans lequel, pour chaque état de réseau,
i) au moins un défaut de réseau (F) est simulé sur le réseau d'alimentation électrique ; et
ii) au moins un nouvel ensemble de valeurs de paramètres pour l'au moins un Dispositif Electronique Intelligent est déduit en utilisant un courant de défaut simulé induit par l'au moins un défaut de réseau simulé en tenant compte de l'état de réseau et de la topologie du réseau.

5. Procédé selon la revendication 4, dans lequel chaque état de réseau est codé sous forme d'expressions logiques, notamment d'expressions Booléennes, notamment de manière à ce que l'état du réseau soit représenté par un vecteur comprenant des valeurs binaires.

6. Procédé selon la revendication 4, dans lequel les étapes i) et ii) sont créées en effectuant une permutation parmi sensiblement tous les états du réseau.

7. Procédé selon l'une des revendications 4 à 6, comprenant en outre
la création d'une table et/ou d'une base de données comprenant les états du réseau, notamment codés sous forme d'expressions logiques, et de l'ensemble de valeurs de paramètres correspondant à chaque état de réseau dans la table et/ou la base de données.

8. Procédé selon l'une des revendications 1 à 7, dans lequel
après l'étape a), le procédé comprend :
a1) le codage de l'état effectif du réseau sous forme d'expressions logiques, notamment d'expressions booléennes, notamment de manière à ce que l'état du réseau soit représenté par un vecteur comprenant des valeurs binaires.

9. Procédé selon l'une des revendications 1 à 8, dans lequel
les étapes a), b), c) et/ou d) sont effectuées après un événement et/ou qu'une étape a) a été effectué périodiquement.

10. Procédé selon l'une des revendications 1 à 9, dans lequel
l'état du réseau comprend la position de tous les dispositifs de commutation.

11. Procédé selon l'une des revendications 1 à 10, dans lequel l'état du réseau comprend l'état d'une ressource d'énergie distribuée connectée au réseau d'alimentation électrique et/ou l'état d'une charge connectée au réseau d'alimentation électrique.

12. Appareil destiné à adapter au moins un ensemble de paramètres d'au moins un Dispositif Electronique Intelligent d'un réseau d'alimentation électrique comportant une pluralité de dispositifs de commutation, dans lequel :
- l'appareil est apte à lire un état de réseau présent du réseau d'alimentation électrique, dans lequel l'état de réseau présent comprend un état présent de la pluralité de dispositifs de commutation ;
- l'appareil comprend une unité de calcul apte à simuler au moins un défaut de réseau dans le réseau d'alimentation électrique et à estimer des courants de défaut passant à travers une pluralité de disjoncteurs surveillés, les courants de défaut étant induits par l'au moins un défaut de réseau simulé en tenant compte de l'état de réseau courant et d'une topologie de réseau du réseau d'alimentation électrique ;
- l'appareil est apte à déduire un nouvel ensemble de valeurs de paramètres pour l'au moins un Dispositif Electronique Intelligent sur la base des courants de défaut estimés ;
- l'appareil est apte à fournir le nouvel ensemble de valeurs de paramètres à l'au moins un Dispositif Electronique Intelligent pour mettre à jour l'au moins un ensemble de paramètres du Dispositif Electronique Intelligent.

13. Appareil selon la revendication 12,
dans lequel l'unité de calcul est apte à sélectionner l'au moins un nouvel ensemble de valeurs de paramètres pour l'au moins un Dispositif Electronique Intelligent parmi une pluralité d'ensembles de valeurs de paramètres en fonction de l'état de réseau présent.

14. Appareil selon la revendication 12 ou 13,
dans lequel l'état de réseau est codé sous forme d'expressions logiques, notamment d'expressions booléennes, notamment de manière à ce que l'état du réseau puisse être représenté par un vecteur comprenant des valeurs binaires.

15. Appareil selon la revendication 13, dans lequel l'appareil est apte à créer la pluralité d'ensembles de valeurs de paramètres en effectuant une permutation parmi une pluralité d'états du réseau, dans lequel, pour chaque état du réseau,
i) au moins un défaut de réseau est simulé ; et
ii) au moins un nouvel ensemble de valeurs de paramètres pour l'au moins un Dispositif Electronique Intelligent est déduit en utilisant un courant de défaut estimé induit par l'au moins un défaut de réseau simulé en tenant compte de l'état du réseau et de la topologie du réseau.
